# EUROPÄISCHE PATENTSCHRIFT

(11) **EP 1 680 961 B1**
(45) Veröffentlichungstag und Bekanntmachung des Hinweises auf die Patenterteilung: **30.09.2015**
(21) Anmeldenummer: 06000438.9
(22) Anmeldetag: 11.01.2006
(51) Int. Cl.: A21B 3/07, A21B 7/00

(54) **Backvorrichtung für insbesondere Selbstbedienungsläden**
Baking device in particular for self-service shops
Dispositif de cuisson notamment pour magasins libre-service

(30) Priorität: 12.01.2005 DE 102005001596
(43) Veröffentlichungstag der Anmeldung: 19.07.2006
(73) Patentinhaber: Aldi Einkauf GmbH & Co. oHG, 45476 Mülheim/Ruhr (DE)
(72) Erfinder: Ochsenschläger, Robert, 45470 Mülheim (DE); Ernst, Peter, 45478 Mülheim (DE)
(74) Vertreter: Nunnenkamp, Jörg

(56) Entgegenhaltungen:
- EP-A2- 1 517 276
- DE-A1- 3 815 466
- DE-U1- 20 302 346
- FR-A1- 2 515 001
- JP-A- 7 064 965
- US-A1- 2003 155 369

## Beschreibung

Die Erfindung betrifft eine Backvorrichtung für insbesondere Selbstbedienungsläden, mit einem Ofenraum, ferner mit einer dem Ofenraum vorgeschalteten Vorratseinheit für Backrohlinge, weiter mit einer dem Ofenraum nachgeschalteten Ausgabeeinheit für Fertigbackwaren, und mit einer Fördereinrichtung, welche die Backrohlinge von der Vorratseinheit durch den Ofenraum zur Ausgabeeinheit überführt, wobei zusätzlich eine Zähleinrichtung vorgesehen ist, welche die Fördereinrichtung und/oder den Ofenraum und/oder eine optionale Zuführeinheit für die Backrohlinge so steuert, dass eine vorgegebene Anzahl an Fertigbackwaren in der Ausgabeeinheit bevorratet wird, indem die Zähleinrichtung Verkaufszahlen für die Fertigbackwaren erfasst und an eine Steuereinheit übermittelt, welche die Fördereinrichtung, gegebenenfalls die Zuführeinheit und optional den Ofenraum zur Nachschubsteuerung beaufschlagt, und wobei die Zähleinrichtung räumlich getrennt von dem Aggregat aus Ofenraum, Fördereinrichtung, Ausgabeeinheit, Vorratseinheit und gegebenenfalls Zuführeinheit ausgelegt und Bestandteil einer Kassieranlage ist.

Bei den Backrohlingen handelt es sich üblicherweise um Teiglinge, beispielsweise in halbgebackenem oder gefrostetem Zustand, die mit Hilfe der Backvorrichtung zu den Fertigbackwaren ausgangsseitig aufgebacken werden. Im Gegensatz zu den Backrohlingen sind die Fertigbackwaren zum unmittelbaren Verzehr geeignet.

Bei einer Backvorrichtung entsprechend der DE 103 58 541 A1 wird so vorgegangen, dass eine Beschickungsvorrichtung mit einer Hub-Fördereinrichtung für Backgut ausgerüstet ist. Dadurch soll ein effizienter Betrieb des Backofens gelingen. Zusätzlich ist ein Sensor, insbesondere eine Lichtschranke, zum Zählen der geförderten Stücke Backgut vorgesehen. Der betreffende Sensor ist mit einer zentralen Steuereinrichtung der Backanlage verbunden und gibt dieser eine Rückmeldung, inwieweit der angeforderte Bedarf an Backgut gedeckt ist.

Bei der vorerwähnten Backvorrichtung ist ebenso wie bei der DE 101 16 424 A1 sowie der DE 203 02 346 U1 die Steuerung des Backvorganges aufwändig und trägt den tatsächlichen Verkaufsbedingungen nur unzureichend Rechnung. So greifen sowohl das Gebrauchsmuster DE 203 02 346 U1 als auch die DE 103 58 541 A1 an der Ausgabeeinheit auf eine Füllstands-Sensoreinrichtung zurück und vollziehen an dieser Stelle im Wesentlichen eine Volumenmessung. Auch eine Gewichtsmessung wird angesprochen.

Je nach dem Volumen an Fertigbackwaren wird die Fördereinrichtung angesteuert. Außerdem kann eine Zeitprogrammierungseinrichtung zur Steuerung herangezogen werden, um Zeiten eines erhöhten Bedarfs zu berücksichtigen.

Ähnlich geht die DE 40 08 591 A1 vor, die zwar keine Backvorrichtung, aber einen Ausgabeautomat für Brötchen beschreibt. Hier wird durch Münzeinwurf eine definierte Zahl an Fertigbackwaren eingestellt und über eine Steuerschaltung die zugehörige Fördereinrichtung abgeschaltet, wenn die durch den Münzeinwurf bestimmte Anzahl von Brötchen im zugehörigen Ausgabekorb liegt.

Die gattungsbildende DE 38 15 466 A1 befasst sich mit einem Speisenautomat mit einem Magazin für eine Mehrzahl portionierter Speisen. Dabei ist zwischen einer Aufwärmstation und einer Ausgabestation eine Warmhalte- und Speicherstation angeordnet. Außerdem findet sich eine Steuereinheit mit einem Datenspeicher zur Abspeicherung einer Anzahl von Speise-Wahlbefehlen und zur zeitversetzten Ansteuerung eines Magazins, der Aufwärmstation und einer Transporteinrichtung derart, dass zu einem vorwählbaren Zeitpunkt eine bestimmte Anzahl von aufgewärmten Speisen in der Warmhalte- und Speicherstation bereitgehalten wird. Auf diese Weise soll in sehr kurzer Zeit eine Mehrzahl von vorgewärmten Speisen an eine Anzahl von Benutzern ausgegeben werden können.

Der Stand der Technik kann unter mehreren Aspekten nicht befriedigen. Zum einen ist die von dem Gebrauchsmuster DE 203 02 346 U1 verfolgte Volumen- oder Gewichtsmessung an der Ausgabeeinheit nicht immer genau und wird zum Beispiel durch Brotreste, Krümel etc. verfälscht. Hinzu kommt, dass Probleme dann auftreten, wenn unterschiedliche Backrohlinge zu den Fertigbackwaren verarbeitet werden sollen. Denn diese verfügen über variables Volumen und/oder Gewicht, so dass nicht mit einheitlichen Steuerbefehlen gearbeitet werden kann, die einem fest vorgegebenen Schwellwert folgen. Auch die angesprochene Zeitprogrammierungseinrichtung spiegelt den tatsächlichen Bedarf nicht wider und ist insofern unflexibel.

Im Hinblick auf die DE 40 08 591 U1 fällt auf, dass einzig durch eine Geldeingabe eine abgezählte Menge an Fertigbackwaren in die Ausgabeeinheit befördert wird. Für einen Betrieb innerhalb eines Selbstbedienungsladens ist diese Vorgehensweise ungeeignet, weil ein Kunde immer eine ausreichende Anzahl an Fertigbackwaren in der Ausgabeeinheit erwartet und im Übrigen natürlich nicht separat bezahlen möchte. Hier will die Erfindung insgesamt Abhilfe schaffen.

Der Erfindung liegt das technische Problem zugrunde, eine derartige Backvorrichtung für insbesondere Selbstbedienungsläden so weiter zu entwickeln, dass die Ausgabeeinheit bedarfsgerecht mit frischen Fertigbackwaren gefüllt ist.

Zur Lösung dieser technischen Problemstellung schlägt die Erfindung bei einer gattungsgemäßen Backvorrichtung für insbesondere Selbstbedienungsläden vor, dass aus den erfassten Verkaufszahlen sowie in der Steuereinheit abgespeicherten Prognosezahlen zukünftige Verkaufszahlen extrapoliert und in Steuerbefehle für die Fördereinrichtung, gegebenenfalls die Zuführeinheit und optional den Ofenraum umgesetzt werden, wobei die erfassten Verkaufszahlen für einen bestimmten Zeitraum in der Vergangenheit in die Zukunft extrapoliert werden, so dass sich hieraus eine erste zukünftige Verbrauchszahl ergibt, und wobei aus den in der Steuereinheit abgespeicherten Prognosezahlen eine für den entsprechenden Wochentag und die Uhrzeit zweite zukünftige Verbrauchszahl abgeleitet wird und beide Verbrauchszahlen eine Gewichtung erfahren.

Die Zähleinrichtung ist örtlich von dem Aggregat aus Ofenraum, Fördereinrichtung, Ausgabeeinheit, Vorratseinheit und gegebenenfalls Zuführeinheit für die Backrohlinge angeordnet. Die Kassieranlage ist in Selbstbedienungsläden ohnehin obligatorisch. In diesem Zusammenhang mag die Zahleinrichtung in eine Rechnereinheit der Kassieranlage integriert oder mit dieser identisch sein. Dadurch ist die Zähleinrichtung in der Lage, Verkaufszahlen für die Fertigbackwaren zu erfassen. Diese Verkaufszahlen für die Fertigbackwaren werden kontinuierlich oder in vorgegebenen zeitlichen Abständen an die Steuereinheit übermittelt.

Mit Hilfe der Steuereinheit werden die Fördereinrichtung, gegebenenfalls die Zuführeinheit und optional der Backofen zur Nachschubsteuerung beaufschlagt. Das heißt, die Steuereinheit gibt an die vorgenannten Elemente entsprechende Steuersignale ab, um Backrohlinge zu den Fertigbackwaren zu verarbeiten, wenn Nachschub erforderlich ist, weil die Verkaufszahlen einen entsprechenden Absatz widerspiegeln.

Dabei werden die von der Steuereinheit abgegebenen Steuerbefehle nicht nur von den erfassten Verkaufszahlen, bzw. aktuellen Absatzzahlen beeinflusst. Sondern in der Steuereinheit können auch abgespeicherte Prognosezahlen hinterlegt sein. Aus den erfassten Verkaufszahlen sowie den abgespeicherten Prognosezahlen extrapoliert die Steuereinheit zukünftige Verbrauchszahlen und leitet hieraus entsprechende Steuerbefehle für die Fördereinrichtung, gegebenenfalls die Zuführeinheit und optional den Backofen ab.

Denkbar ist es hier im einfachsten Fall, die erfassten Verkaufszahlen für einen bestimmten Zeitraum in der Vergangenheit, beispielsweise eine halbe Stunde, in die Zukunft zu extrapolieren, so dass sich hieraus eine zukünftige erste Verbrauchszahl für den folgenden halbstündigen Zeitraum ergibt. Aus den in der Steuereinheit abgespeicherten Prognosezahlen kann dann noch für den entsprechenden Wochentag und die Uhrzeit eine zweite zukünftige Verbrauchszahl abgeleitet werden. Es empfiehlt sich, beispielsweise die erste und die zweite zukünftige Verbrauchszahl zu addieren und den arithmetischen Mittelwert zu bilden. Selbstverständlich sind auch andere Gewichtungen denkbar und werden von der Erfindung umfasst.

Wie bereits ausgeführt, ist die Zähleinrichtung Bestandteil der Kassieranlage bzw. in diese integriert. Dagegen stellt die Steuereinheit einen integralen Bestandteil der eigentlichen Backvorrichtung, d. h. des Aggregates aus Ofenraum, Fördereinrichtung, Ausgabeeinheit, Vorratseinheit und gegebenenfalls Zuführeinheit dar. Da die Kassieranlage einerseits und das vorerwähnte Aggregat andererseits räumlich getrennt voneinander meistens im Selbstbedienungsladen aufgestellt sind, ist es erforderlich, für einen Kommunikationskanal zwischen der Zähleinrichtung und der Steuereinheit zu sorgen.

Tatsächlich kann die Zähleinrichtung mit der Steuereinheit drahtlos und/oder drahtgebunden kommunizieren, und zwar je nach den örtlichen Gegebenheiten. Dabei lassen sich zusätzliche Elektroinstallationen verhindern, wenn das Stromversorgungsnetz zur Datenübertragung genutzt wird, wie dies beispielhaft in dem Aufsatz "Datenübertragung über das 220-Volt-Netz" von Reiner Künzel in der Zeitschrift "Elektronik" vom 7. Oktober 1983 Seiten 100 bis 104 beschrieben wird. Das stellt vorliegend kein Problem dar, weil sowohl die Steuereinheit über das Aggregat aus Ofenraum, Fördereinrichtung, Ausgabeeinheit, Vorratseinheit und gegebenenfalls Zuführeinheit als auch die Zähleinrichtung über die Kassieranlage jeweils mit dem Stromversorgungsnetz verbunden sind.

Der Offenraum und die Fördereinrichtung können größtenteils in einem gemeinsamen Gehäuse angeordnet sein, um einen kompakten Aufbau zu gewährleisten. Außerdem lässt sich ein solches gemeinsames Gehäuse wärmeisolierend ausgestalten, so dass die Backvorrichtung insgesamt keine signifikant von der Außentemperatur abweichende Temperatur aufweist. Die Fördereinrichtung und/oder die optionale Zuführeinheit können jeweils als Förderband ausgebildet sein bzw. wenigstens ein solches beinhalten. Selbstverständlich liegen aber auch Varianten mit Muldenbändern im Rahmen der Erfindung, wie sie in der DE 101 16 423 A1 beschrieben werden oder auch umlaufende Backplatten oder Paternosterantriebe entsprechend der DE 529 206. Ebenso eine Förderschnecke wie sie mit der US-PS 5 881 636 geliefert wird.

Im Ergebnis wird eine Backvorrichtung zur Verfügung gestellt, die eine zielgenaue und verbrauchsabhängige Steuerung des Backvorganges zur Verfügung stellt, die bisher nicht für möglich gehalten wurde. Dabei geht die Erfindung von der Erkenntnis aus, dass die von einer Kassieranlage ermittelten Verkaufszahlen an Fertigbackwaren vorteilhaft zur Steuerung herangezogen werden können. Zusätzlich mögen Prognosezahlen Berücksichtigung finden, die aus Verkaufszahlen in der Vergangenheit abgeleitet werden. Dabei versteht es sich, dass die angesprochenen Prognosezahlen den tatsächlichen Verkaufszahlen jeweils nachgeführt werden, so dass die Steuereinheit im Hinblick auf die extrapolierten zukünftigen Verbrauchszahlen "lernfähig" ausgebildet ist.

Hierdurch wird sichergestellt, dass in der dem Ofenraum nachgeschalteten Ausgabeeinheit genauso viele Fertigbackwaren vorhanden sind, wie in einem vorgegebenen Zeitraum prognostiziert verbraucht werden. Beispielsweise kann man hier mit halb- oder viertelstündigen Zeiträumen arbeiten, je nachdem wie lange die Backvorrichtung für das Fertigbacken der Backrohlinge braucht. Dabei versteht es sich, dass die hiermit zusammenhängende Backzeit deutlich kürzer als der zuvor angegebene Prognosezeitraum ausgebildet ist.

Weil die erfindungsgemäße Backvorrichtung grundsätzlich variable Werte für die Backzeit, den Prognosezeitraum und selbstverständlich auch die Größe und das Gewicht der Backrohlinge bzw. Fertigbackwaren zulässt, lassen sich ganz unterschiedliche Backrohlinge verarbeiten. Das kann vom Brötchen über Baguettes bis hin zu Broten reichen.

Neben dieser Variabilität ist die Genauigkeit gesteigert, weil Brotreste keine Rolle spielen. Im Übrigen können die Investitionskosten reduziert werden, weil die Verkaufszahlen in der Regel softwaremäßig aus dem Datenbestand der Kassieranlage abgeleitet werden. Zusätzliche Wäge-, Volumen- oder dergleichen Einrichtungen sind entbehrlich. Hierin sind die wesentlichen Vorteile zu sehen.

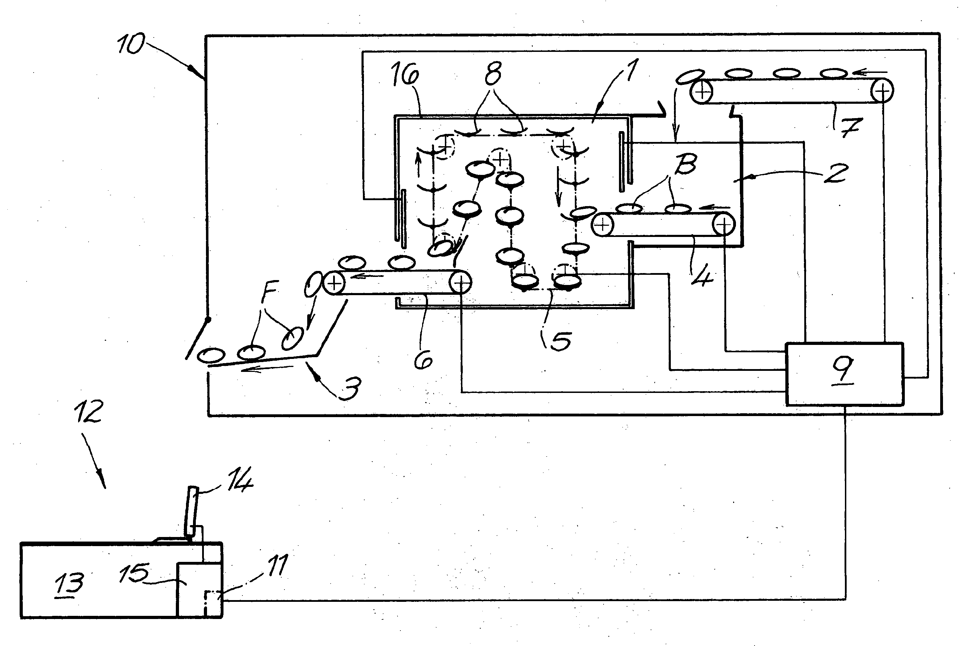

Im Folgenden wird die Erfindung anhand einer lediglich ein Ausführungsbeispiel darstellenden Zeichnung näher erläutert; die einzige Figur zeigt die erfindungsgemäße Backvorrichtung schematisch, reduziert auf die wesentlichen Bestandteile.

In der einzigen Figur ist eine Backvorrichtung dargestellt, die sich insbesondere zur Aufstellung in Selbstbedienungsläden eignet. Tatsächlich verfügt die Backvorrichtung über einen Ofenraum 1, eine dem Ofenraum 1 vorgeschaltete Vorratseinheit 2 für Backrohlinge B, eine dem Ofenraum 1 nachgeschaltete Ausgabeeinheit 3 für Fertigbackwaren F und eine Fördereinrichtung 4, 5, 6. Zusätzlich ist noch eine der Vorratseinheit 2 zugeordnete Zuführeinheit 7 realisiert, die jedoch nicht zwingend ist und eine Option darstellt.

Im Rahmen des Ausführungsbeispiels und selbstverständlich nicht zwingend setzt sich die Fördereinrichtung 4, 5, 6 aus drei Bestandteilen zusammen, nämlich einem Förderband 4, welches die Backrohlinge B aus der Vorratseinheit 2 in den Ofenraum 1 befördert, einem Paternosterwerk 5 mit daran angeschlossenen Warenträgern 8 und einem weiteren Förderband 6, welches die im Ofenraum 1 gebackenen Backrohlinge B als Fertigbackwaren F aus dem Ofenraum 1 in die Ausgabeeinheit 3 überführt. Die Fördereinrichtung 4, 5, 6 sorgt also dafür, dass die Backrohlinge B von der Vorratseinheit 2 durch den Ofenraum 1 hindurch zur Ausgabeeinheit 3 überführt werden. Zur Steuerung der Fördereinrichtung 4, 5, 6 ist eine Steuereinheit 9 realisiert. - Anstelle des Paternosterwerkes 5 kann selbstverständlich auch eine Förderschnecke, ähnlich wie bei der US-PS 5 881 636, Verwendung finden.

Die Warenträger 8 des Paternosterwerkes 5 werden oberhalb des Förderbandes 6 geschwenkt, so dass die fertiggebackenen Backrohlinge B auf das Förderband 6 auftreffen und von hier aus in die Ausgabeeinheit 3 überführt werden. Das Paternosterwerk 5 kann dabei im Detail so aufgebaut sein, wie dies in der DE 529 206 beschrieben wird. Selbstverständlich sind auch völlig andere Gestaltungen der Fördereinrichtung 4, 5, 6 denkbar und werden vom Erfindungsgedanken umfasst. Entscheidend für die vorliegende Innovation ist einzig und allein die Tatsache, dass die Backrohlinge B von der Vorratseinheit 2 durch den Ofenraum 1 hindurch zur Ausgabeeinheit 3 mit Hilfe der Fördereinrichtung 4, 5, 6 gefördert werden, und zwar gesteuert mit Hilfe der Steuereinheit 9.

An die Steuereinheit 9 ist neben dem Ofenraum 1 und der Fördereinrichtung 4, 5, 6 auch die optionale Zuführeinheit 7 angeschlossen, die die Backrohlinge B in die Vorratseinheit 2 bzw. aus einem Lager etc. hierin überführt. Selbstverständlich kann die Vorratseinheit 2 auch anderweitig - beispielsweise manuell - bestückt werden. Die Steuereinheit 9 wird in Verbindung mit der optionalen Zuführeinheit 7 sowie dem Aggregat aus Ofenraum 1, Fördereinrichtung 4, 5, 6, Ausgabeeinheit 3 und Vorratseinheit 2 in einem gemeinsamen Gehäuse 10 aufgenommen.

Für die Erfindung von besonderer Bedeutung ist nun der Umstand, dass zusätzlich eine Zähleinrichtung 11 realisiert ist, welche im Ausführungsbeispiel die Fördereinrichtung 4, 5, 6, den Ofenraum 1 und die Zuführeinheit 7 für die Backrohlinge B so steuert, dass eine vorgegebene Anzahl an Fertigbackwaren F in der Ausgabeeinheit 3 bevorratet wird. Dabei ist die Zähleinrichtung 11 getrennt von dem Aggregat aus Ofenraum 1, Fördereinrichtung 4, 5, 6, Ausgabeeinheit 3, Vorratseinheit 2 und Zuführeinrichtung 7 ausgelegt. Tatsächlich befindet sich die Zähleinrichtung 11 außerhalb des die vorgenannten Elemente in Verbindung mit der Steuereinheit 9 aufnehmenden Gehäuses 10.

Man erkennt, dass die Zähleinrichtung 11 Bestandteil einer Kassieranlage 12 ist, die eine lediglich schematische Darstellung erfahren hat. Die Kassieranlage 12 verfügt im Wesentlichen über einen Korpus 13, einen Bildschirm 14 sowie eine Rechnereinheit 15. Der Korpus 13 beinhaltet meistens eine Box mit Sitzgelegenheit für eine Bedienperson, die beispielsweise und nicht einschränkend die über ein nicht dargestelltes Förderband zugeführten Waren mit Hilfe einer Scaneinrichtung registriert. Einzelheiten einer solchen Kassieranlage werden beispielhaft und nicht einschränkend in der EP 1 090 570 B1 beschrieben.

Selbstverständlich kann die Kassieranlage 12 auch bedienerlos arbeiten. In diesem Fall sorgen die Kunden des Selbstbedienungsladens für die Registrierung der eingekauften Waren bzw. diese werden automatisch erfasst. So oder so verfügt die Rechnereinheit 15 über Werte, welche die Verkaüfszahlen für die Fertigbackwaren F widerspiegeln. Dabei können die Verkaufszahlen über einen vorgegebenen Verkaufszeitraum erfasst und an die in die Rechnereinheit 15 integrierte Zähleinrichtung 11 übergeben werden. Selbstverständlich umfasst die Erfindung auch Varianten dergestalt, dass die Zähleinrichtung 11 als Softwaremodul ausgeführt ist, um aus den registrierten Verkaufszahlen diejenigen für die Fertigbackwaren F innerhalb des angegebenen und frei wählbaren Verkaufszeitraumes zu extrahieren.

In jedem Fall liegen in der Zähleinrichtung 11 die Verkaufszahlen für die Fertigbackwaren F innerhalb des vorgegebenen und selbstverständlich frei wählbaren Verkaufszeitraumes vor. Diese Verkaufszahlen werden entweder kontinuierlich oder jeweils nach Ende des Verkaufszeitraumes (beispielsweise jede viertel Stunde oder jede halbe Stunde) an die Steuereinheit 9 übermittelt, welche die Fördereinrichtung 4, 5, 6, die Zuführeinheit 7 und optional den Ofenraum 1 zur Nachschubsteuerung beaufschlagt. Tatsächlich werden aus den erfassten Verkaufszahlen an Fertigbackwaren F im Verkaufszeitraum zukünftige Verbrauchszahlen extrapoliert.

Eine lineare Extrapolation der Verkaufszahlen im vergangenen Verkaufszeitraum für den zukünftigen Verkaufszeitraum mag dabei zu einer ersten zukünftigen Verbrauchszahl korrespondieren. Die Steuereinheit 9 verfügt darüber hinaus noch über abgespeicherte Prognosezahlen, die grundsätzlich auch in der Rechnereinheit 15 der Kassieranlage 12 hinterlegt sein können. Diese Prognosezahlen geben Auskunft über erwartete Verkäufe im zukünftigen Verkaufszeitraum anhand von Vergangenheitszahlen. Daraus lässt sich eine zweite zukünftige Verbrauchszahl ableiten. Die erste und die zweite Verbrauchszahl können addiert und arithmetisch gemittelt werden, so dass sich insgesamt eine zukünftige Verbrauchszahl angeben lässt, die entsprechende Steuerbefehle der Steuereinheit 9 für die Fördereinrichtung 4, 5, 6, die Zuführeinheit 7 und den Ofenraum 1 initiiert.

Wenn beispielsweise im zukünftigen Verbrauchszeitraum ein erhöhter Bedarf zu erwarten ist, so wird die Steuereinheit 9 dafür sorgen, dass genügend Backrohlinge B zu Fertigbackwaren F verarbeitet werden und in der Ausgabeeinheit 3 zur Verfügung stehen. Etwaige Verzögerungen zwischen einer Entnahme der Fertigbackwaren F und ihrer Registrierung beim Verkauf mit Hilfe der Kassieranlage 12 können einfach dadurch ausgeglichen werden, dass die beschriebene Backvorrichtung örtlich zwar getrennt aber nicht zu weit von der Kassieranlage 12 entfernt ist, so dass Käufer die Fertigbackwaren F erst am Ende ihres Einkaufes aus der Ausgabeeinheit 3 entnehmen.

Die Zähleinrichtung 11 kann mit der Steuereinheit 9 drahtlos und/oder drahtgebunden kommunizieren, beispielsweise über das Stromversorgungsnetz. Für den Ofenraum 1 und die Fördereinrichtung 4, 5, 6 mag größtenteils ein gemeinsames Gehäuse 16 realisiert werden, welches sich zudem wärmeisoliert ausgestalten lässt. Dadurch werden Wärmeverluste innerhalb des Ofenraumes 1 minimiert und die Wärmeabgabe nach außen verringert.

## Patentansprüche

1. Backvorrichtung für insbesondere Selbstbedienungsläden, mit
- einem Ofenraum (1),
- ferner mit einer dem Ofenraum (1) vorgeschalteten Vorratseinheit (2) für Backrohlinge (B), weiter
- mit einer dem Ofenraum (1) nachgeschalteten Ausgabeeinheit (3) für Fertigbackwaren (F), und
- mit einer Fördereinrichtung (4, 5, 6), welche die Backrohlinge (B) von der Vorratseinheit (2) durch den Ofenraum (1) zur Ausgabeeinheit (3) überführt,
wobei zusätzlich eine Zähleinrichtung (11) vorgesehen ist, welche die Fördereinrichtung (4, 5, 6) und/oder den Ofenraum (1) und/oder eine optionale Zuführeinheit (7) für die Backrohlinge (B) so steuert, dass eine vorgegebene Anzahl an Fertigbackwaren (F) in der Ausgabeeinheit (3) bevorratet wird, indem
die Zähleinrichtung (11) Verkaufszahlen für die Fertigbackwaren (F) erfasst und an eine Steuereinheit (9) übermittelt, welche die Fördereinrichtung (4, 5, 6), gegebenenfalls die Zuführeinheit (7) und optional den Ofenraum (1) zur Nachschubsteuerung beaufschlagt, und
wobei die Zähleinrichtung (11) räumlich getrennt von dem Aggregat aus Ofenraum (1), Fördereinrichtung (4, 5, 6), Ausgabeeinheit (3), Vorratseinheit (2) und gegebenenfalls Zuführeinheit (7) ausgelegt und Bestandteil einer Kassieranlage (12) ist,
**dadurch gekennzeichnet, dass**
- aus den erfassten Verkaufszahlen sowie in der Steuereinheit (9) abgespeicherten Prognosezahlen zukünftige Verkaufszahlen extrapoliert und in Steuerbefehle für die Fördereinrichtung (4, 5, 6), gegebenenfalls die Zuführeinheit (7) und optional den Ofenraum (1) umgesetzt werden, wobei
- die erfassten Verkaufszahlen für einen bestimmten Zeitraum in der Vergangenheit in die Zukunft extrapoliert werden, so dass sich hieraus eine erste zukünftige Verbrauchszahl ergibt, und wobei
- aus den in der Steuereinheit (9) abgespeicherten Prognosezahlen eine für den entsprechenden Wochentag und die Uhrzeit zweite zukünftige Verbrauchszahl abgeleitet wird und beide Verbrauchszahlen eine Gewichtung erfahren.

2. Backvorrichtung nach Anspruch 1, **dadurch gekennzeichnet, dass** die Zähleinrichtung (11) in eine Rechnereinheit (15) der Kassieranlage (12) integriert ist.

3. Backvorrichtung nach Anspruch 1 oder 2, **dadurch gekennzeichnet, dass** die Steuereinheit (9) als ein integraler Bestandteil ausgeführt ist.

4. Backvorrichtung nach einem der Ansprüche 1 bis 3, **dadurch gekennzeichnet, dass** die Zähleinrichtung (11) mit der Steuereinheit (9) drahtlos und/oder drahtgebunden kommuniziert.

5. Backvorrichtung nach einem der Ansprüche 1 bis 4, **dadurch gekennzeichnet, dass** der Ofenraum (1) und die Fördereinrichtung (4, 5, 6) größtenteils in einem gemeinsamen Gehäuse (16) angeordnet sind, welches gegebenenfalls wärmeisolierend ausgeführt ist.

6. Backvorrichtung nach einem der Ansprüche 1 bis 5, **dadurch gekennzeichnet, dass** die Fördereinrichtung (4, 5, 6) wenigstens ein Förderband (4, 6) sowie ein Paternosterwerk (5) und/oder eine Förderschnecke aufweist.

## Claims

1. A baking device, in particular for self-service stores, comprising
- an oven chamber (1),
- further comprising a storage unit (2) for pieces of dough (B) connected upstream of the oven chamber (1), furthermore
- comprising an output unit (3) for convenience bakery products (F) is connected downstream from the oven chamber (1), and
- comprising a conveying device (4, 5, 6), which transfers the pieces of dough (B) from the storage unit (2) through the oven chamber (1) to the output unit (3),
wherein provision is additionally made for a counting device (11), which controls the conveying device (4, 5, 6) and/or the oven chamber (1) and/or an optional feeding unit (7) for the pieces of dough (B) such that a predetermined number of convenience bakery products (F) is stored in the output unit (3), in that
the counting device (11) determines sales figures for the convenience bakery products (F) and transfers them to a control unit (9), which acts upon the conveying device (4, 5, 6), if applicable the feed unit (7) and optionally the oven chamber (1), for controlling the replenishment, and
wherein the counting device (11) is designed so as to be spatially separated from the aggregate of oven chamber (1), conveying device (4, 5, 6), output unit (3), storage unit (2) and, if applicable, feed unit (7), and is part of a check-out system (12),
**characterized in that**
- future sales figures are extrapolated and are converted into control commands for the conveying device (4, 5, 6), if applicable the feed unit (7) and optionally the oven chamber (1), from the determined sales figures as well as from forecast figures, which are stored in the control unit (9), wherein
- the determined sales figures are extrapolated into the future for a certain time period in the past, so that first future consumption figures result from this, and wherein
- second future consumption figures for the corresponding day of the week and the time of day are derived from the forecast figures stored in the control unit (9) and both consumption figures experience a weighting.

2. The baking device according to claim 1, **characterized in that** the counting device (11) is integrated into a processing unit (15) of the check-out system (12).

3. The baking device according to claim 1 or 2, **characterized in that** the control unit (9) is embodied as integral part.

4. The baking device according to one of claims 1 to 3, **characterized in that** the counting device (11) communicates wirelessly and/or in a wire-connected manner with the control unit (9).

5. The baking device according to one of claims 1 to 4, **characterized in that** the oven chamber (1) and the conveying device (4, 5, 6) are arranged for the most part in a common housing (16), which is embodied so as to be heat insulating, if applicable.

6. The baking device according to one of claims 1 to 5, **characterized in that** the conveying device (4, 5, 6) has at least one conveyor belt (4, 6) as well as a paternoster device (5) and/or a screw conveyor.

## Revendications

1. Dispositif de cuisson au four, pour notamment des magasins libre-service, avec
- un espace de four (1),
- par ailleurs, avec une unité de réserve (2) montée en amont de l'espace de four (1), pour des pâtons (B) en outre,
- avec une unité de distribution (3) montée en aval de l'espace de four (1) pour des produits de boulangerie (F) finis et
- avec un système de convoyage (4, 5, 6), lequel transfère les pâtons (B) de l'unité de réserve (2), via l'espace de four (1) vers l'unité de distribution (3),
étant prévu en supplément un système de comptage (11), lequel commande le système de convoyage (4, 5, 6) et/ou l'espace de four (1) et/ou une unité d'alimentation (7) optionnelle pour les pâtons (B), de telle sorte qu'un nombre prédéfini de produits de boulangerie (F) finis soit stocké dans l'unité de distribution (3), en ce que
le système de comptage (11) enregistre des chiffres de vente pour les produits de boulangerie (F) finis et les transmet à une unité de commande (9), laquelle amorce le système de convoyage (4, 5, 6), le cas échéant l'unité d'alimentation (7) et en option, l'espace de four (1) pour commander le ravitaillement et
le système de comptage (11) étant prévu en étant physiquement séparé de l'ensemble comprenant l'espace de four (1), le système de convoyage (4, 5, 6), l'unité de distribution (3), l'unité de réserve (2) et le cas échéant l'unité d'alimentation (7) et étant un élément d'une installation d'encaissement (12),
**caractérisé en ce que**
- à partir des chiffres de vente enregistrés et de chiffres pronostiqués sauvegardés dans l'unité de commande (9), des futurs chiffres de vente sont extrapolés et transformés en instructions de commande pour le système de convoyage (4, 5, 6), le cas échéant pour l'unité d'alimentation (7) et en option pour l'espace de four (1),
- les chiffres de ventes enregistrés étant extrapolés dans le futur pour une certaine période du passé, de sorte qu'il en résulte un futur chiffre de consommation et
- à partir des chiffres pronostiqués sauvegardés dans l'unité de commande (9) étant déduit un deuxième futur chiffre de consommation pour le jour de semaine correspondant et pour l'horaire et les deux chiffres de consommation étant pondérés.

2. Dispositif de cuisson au four selon la revendication 1, **caractérisé en ce que** le système de comptage (11) est intégré dans une unité d'ordinateur (15) de l'installation d'encaissement (12).

3. Dispositif de cuisson au four selon la revendication 1 ou la revendication 2, **caractérisé en ce que** l'unité de commande (9) est conçue en tant qu'un élément constitutif intégral.

4. Dispositif de cuisson au four selon l'une quelconque des revendications 1 à 3, **caractérisé en ce que** le système de comptage (11) communique par connexion radio et/ou filaire avec l'unité de commande (9).

5. Dispositif de cuisson au four selon l'une quelconque des revendications 1 à 4, **caractérisé en ce que** l'espace de four (1) et le système de convoyage (4, 5, 6) sont placés en majeure partie dans un carter (16) commun, lequel est conçu le cas échéant en version thermo-isolante.

6. Dispositif de cuisson au four selon l'une quelconque des revendications 1 à 5, **caractérisé en ce que** le système de convoyage (4, 5, 6) comporte au moins une bande de transport (4, 6), ainsi qu'un paternoster (5) et/ou une vis sans fin.
